# EUROPÄISCHE PATENTSCHRIFT

(11) **EP 3 636 933 B1**
(45) Veröffentlichungstag und Bekanntmachung des Hinweises auf die Patenterteilung: **03.11.2021**
(21) Anmeldenummer: 19196742.1
(22) Anmeldetag: 11.09.2019
(51) Int. Cl.: F04D 19/04, F04D 27/00, G01K 13/08, G01J 5/52

(54) **VERFAHREN ZUM ERMITTELN EINER TEMPERATUR MITTELS EINES INFRAROT-SENSORS**
METHOD FOR DETERMINING A TEMPERATURE USING AN INFRARED SENSOR
PROCÉDÉ DE DÉTERMINATION D'UNE TEMPÉRATURE UTILISANT UN CAPTEUR INFRAROUGE

(43) Veröffentlichungstag der Anmeldung: 15.04.2020
(73) Patentinhaber: PFEIFFER VACUUM GMBH, 35614 Asslar (DE)
(72) Erfinder: Wissner, Jürgen, 35466 Rabenau (DE); Schnarr, Johannes, 35625 Rechtenbach (DE); Wirth, Adrian, 35619 Braunfels (DE)
(74) Vertreter: Manitz Finsterwald Patent- und Rechtsanwaltspartnerschaft mbB

(56) Entgegenhaltungen:
- GB-A- 2 553 374
- US-B1- 6 930 278

## Beschreibung

Die Erfindung betrifft ein Verfahren zum Ermitteln einer Temperatur mittels eines in einer Vakuumpumpe, insbesondere einer Turbomolekularpumpe, integrierten Infrarot (IR)-Sensor-Systems, sowie eine Vakuumpumpe mit einem IR-Sensor-System zur Durchführung des erfindungsgemäßen Verfahrens.

IR-Sensoren spielen eine wichtige Rolle bei der berührungsfreien Überwachung von Temperaturen, insbesondere von rotierenden Maschinen und deren beweglichen Teilen im Betrieb. Unter anderem kommen IR-Sensoren in Vakuumpumpen, insbesondere Turbomolekularpumpen zum Einsatz. Eine entsprechende Vorrichtung ist in der GB 2553374 A gezeigt. Oft ist die einwandfreie Funktion einer rotierenden Maschine oder Vakuumpumpe empfindlich von der Betriebstemperatur abhängig, da beispielsweise eine temperaturabhängige Ausdehnung von Bauteilen über ein bestimmtes Maß hinaus zu Defekten führen kann. Entsprechend wichtig ist es, dass ein Verfahren zum Ermitteln der Betriebstemperatur jederzeit zuverlässig funktioniert und korrekte Temperaturwerte ausgibt. Im Betrieb einer rotierenden Maschine kann es jedoch zu Verunreinigungen oder Veränderungen an einem in der Maschine angebrachten IR-Sensor kommen, beispielsweise durch eine Ablagerung von Betriebsmitteln oder durch einen Kontakt mit korrosiven Prozessgasen, sodass gegebenenfalls verfälschte Temperaturwerte durch den IR-Sensor gemessen werden.

Ein Verfahren zur Bestimmung einer Temperatur mittels IR-Sensoren, welche unter Einsatz eines Schwarzkörperstrahlers wiederholt oder kontinuierlich kalibriert werden, um eine Verschlechterung der IR-Sensoren zu kompensieren, ist aus der US 6,930,278 B1 bekannt.

Ausgehend von diesem Stand der Technik hat die vorliegende Erfindung zur Aufgabe, ein Verfahren zur Messung einer Temperatur sowie eine Vakuumpumpe mit einem IR-Sensor-System bereitzustellen, das sich durch eine erhöhte Zuverlässigkeit und eine erhöhte Messgenauigkeit auszeichnet.

Diese Aufgabe wird gelöst durch ein Verfahren mit den Merkmalen des Anspruchs 1 sowie eine Vakuumpumpe mit einem IR-Sensor-System mit den Merkmalen des Anspruchs 14.

Erfindungsgemäß wird bei einem Verfahren zum Ermitteln einer Temperatur mittels eines in einer Vakuumpumpe, insbesondere Turbomolekularpumpe, integrierten IR-Sensor-Systems eine erste Temperatur T_{obs,1} an einem Messort gemessen, eine Referenztemperatur T_{ref} durch eine Wärmequelle an einem Referenzort erzeugt, eine zweite Temperatur T_{obs,2} an dem Referenzort gemessen, die zweite Temperatur T_{obs,2} mit einer aus der Referenztemperatur T_{ref} resultierenden erwarteten Temperatur Tₑₓₚ verglichen, und bei einer Abweichung der zweiten Temperatur T_{obs,2} von der erwarteten Temperatur Tₑₓₚ die erste Temperatur T_{obs,1} anhand der Abweichung korrigiert.

Hierdurch kann einerseits die Funktionstüchtigkeit eines IR-Sensors überprüft werden, indem ein von dem IR-Sensor-System ausgegebener Messwert mit einem bekannten erwarteten Messwert verglichen wird. Wenn eine Abweichung zwischen dem ausgegeben Messwert und dem erwarteten Messwert detektiert wird, wird eine Beeinträchtigung der Funktion des IR-Sensor-Systems angenommen. Andererseits können fehlerhafte Messwerte des IR-Sensor-Systems korrigiert werden. Dadurch ergibt sich eine erhöhte Betriebssicherheit für temperaturempfindliche Geräte, beispielsweise Turbomolekularpumpen. Das Auftreten von Defekten aufgrund unzureichender Temperaturkontrolle kann somit vermieden werden, was wiederum die Wirtschaftlichkeit des Betriebs der rotierenden Maschine verbessert.

Insbesondere kann das erfindungsgemäße Verfahren auch im laufenden Betrieb eines Geräts, in das das IR-Sensor-System integriert ist, durchgeführt werden, also im laufenden Betrieb einer Vakuumpumpe.

T_{obs,1} ist die mittels eines IR-Sensors gemessene Temperatur an dem Messort, an dem eine tatsächliche Temperatur Tᵢₛₜ möglichst exakt bestimmt werden soll. Der Messort kann grundsätzlich eine statische Oberfläche sein. Da ein IR-Sensor zur berührungslosen Temperaturmessung geeignet ist, kann aber auch die Temperatur beweglicher Maschinenteile bestimmt werden. Entsprechend kann der Messort auf einem rotierenden Teil einer Vakuumpumpe angeordnet sein, insbesondere auf einer Rotorwelle einer Vakuumpumpe.

Die Wärmequelle zur Erzeugung der Referenztemperatur T_{ref} an dem Referenzort kann ein Heizelement umfassen, insbesondere ein regelbares Heizelement. Beispielsweise kann eine Widerstandsheizung eingesetzt werden. Eine solche Widerstandsheizung kann zum Beispiel einen Heizdraht umfassen. Fallen der Messort und der Referenzort zusammen, so kann der Heizdraht im Bereich des IR-Sensors angeordnet oder sogar an diesem befestigt sein. Der Einsatz eines Heizdrahts als IR-Referenzstrahler ist einerseits kostengünstig und hat andererseits den Vorteil, dass bei entsprechender Wahl der Heizstromstärke ein selbstreinigender Effekt des Drahts einsetzt und das Emissionsverhalten des Drahts durch "Freibrennen" konstant bleibt.

Die von der Wärmequelle erzeugte Referenztemperatur T_{ref} kann aus einer Kalibrierung bekannt sein. Beispielsweise kann für einen Heizdraht bekannt sein, welche Temperatur T_{ref} er für eine spezifische oder jede Leistungsaufnahme erzeugt.

An dem Referenzort wird die zweite Temperatur T_{obs,2} gemessen, insbesondere wiederum mittels eines IR-Sensors. Die an dem Referenzort erwartete Temperatur Tₑₓₚ ist durch die von der Wärmequelle erzeugte Referenztemperatur T_{ref} definiert, sowie gegebenenfalls durch weitere (bekannte) Temperaturbeiträge am Referenzort. Bei korrekter Funktion des IR-Sensors sollte die gemessene zweite Temperatur T_{obs,2} mit der erwarteten Temperatur Tₑₓₚ übereinstimmen. Die gemessene zweite Temperatur T_{obs,2} kann aber von Tₑₓₚ abweichen, wenn der IR-Sensor durch Einflüsse aus seiner Umgebung in seiner Funktion beeinträchtigt ist, sodass die erhaltenen Messwerte von den tatsächlich vorliegenden Temperaturwerten abweichen. Solche Funktionsbeeinträchtigungen können unter anderem durch Verunreinigung des IR-Sensors bzw. dessen IR-Transmissionsfensters hervorgerufen werden, beispielsweise durch abgelagerte Betriebsmittel des Geräts. Zudem kann ein Kontakt mit korrosiven Prozessgasen oder eine andersartige Kontamination zu einer Veränderung der IR-Transmission führen.

Weicht die gemessene zweite Temperatur T_{obs,2} von der erwarteten Temperatur Tₑₓₚ ab, kann auf eine Funktionsbeeinträchtigungen des IR-Sensors geschlossen werden. Erfindungsgemäß wird die erste Temperatur T_{obs,1} gegebenenfalls anhand einer Abweichung zwischen T_{obs,2} und Tₑₓₚ korrigiert. Alternativ oder zusätzlich kann auch ein Alarmsignal ausgegeben werden, ein Stopp der Vakuumpumpe herbeigeführt werden, und/oder eine Aufforderung zur Durchführung einer Wartung bzw. Reparatur ausgegeben werden.

Vorteilhafte Ausbildungen der Erfindung sind den Unteransprüchen, der Beschreibung und der Zeichnung zu entnehmen.

So kann die von der Wärmequelle erzeugte Referenztemperatur T_{ref} höher sein als die tatsächliche Temperatur Tᵢₛₜ am Messort.

Gemäß einer Ausführungsform des Verfahrens wird basierend auf der Abweichung der zweiten Temperatur T_{obs,2} von der erwarteten Temperatur Tₑₓₚ ein Korrekturfaktor ermittelt, mittels welchem eine tatsächliche Temperatur Tᵢₛₜ am Messort aus der ersten Temperatur T_{obs,1} bestimmt wird.

Eine Funktionsbeeinträchtigung kann die IR-Transmission durch ein IR-Transmissionsfenster eines IR-Sensors am Referenzort im Vergleich zu der auf Basis der erzeugten Referenztemperatur erwarteten IR-Transmission reduzieren. Die von dem IR-Sensor am Referenzort gemessene Temperatur entspricht in diesem Fall nicht der durch die Wärmequelle erzeugten Referenztemperatur T_{ref}, sondern einer abweichenden beobachteten Temperatur T_{obs,2}. Unter der Annahme, dass an dem Messort und an dem Referenzort dieselben Umgebungseinflüsse auf einen IR-Sensor einwirken, kann aus der ersten Temperatur T_{obs,1} die tatsächliche Temperatur Tᵢₛₜ an dem Messort mittels eines Korrekturfaktors bestimmt werden, der auf dem Quotienten T_{ref} / T_{obs,2} basiert. Dieses Vorgehen hat den Vorteil, dass eine Funktionsbeeinträchtigung des IR-Sensors im laufenden Betrieb der Vakuumpumpe kompensiert werden kann, sodass ein sicherer Betrieb der Vakuumpumpe auch bei verunreinigtem oder anderweitig beeinträchtigtem IR-Sensor möglich bleibt.

Vorteilhafterweise wird die Referenztemperatur T_{ref} der Wärmequelle mit einem Messfühler erfasst. Beispielsweise können Messwiderstände als Temperatursensoren eingesetzt werden, um T_{ref} unabhängig von dem IR-Sensor zu erfassen. Durch eine derartige exakte Bestimmung der Referenztemperatur T_{ref} kann gegebenenfalls eine Korrektur zur Bestimmung von Tᵢₛₜ aus T_{obs,1} besonders exakt durchgeführt werden.

Gemäß einer Ausführungsform wird die Referenztemperatur T_{ref} durch die Wärmequelle nur zeitweise, insbesondere gepulst, erzeugt. An dem Referenzort ist die Referenztemperatur T_{ref} dann nur detektierbar, wenn die Wärmequelle angeschaltet ist. Die Erzeugung von T_{ref} durch die Wärmequelle kann dabei periodisch erfolgen, wobei insbesondere die Zeitspanne, in der T_{ref} erzeugt wird, kleiner sein kann als die Zeitspanne, in der T_{ref} nicht erzeugt wird. Eine derartige zeitabhängige Referenztemperatur T_{ref} hat den Vorteil, dass eine Messung von T_{obs,1} und T_{obs,2} mit einem einzigen IR-Sensor möglich wird: Bei ausgeschalteter Wärmequelle wird nur die erste Temperatur des Messobjekts T_{obs,1} an dem Messort gemessen, während zu Zeiten mit angeschalteter Wärmequelle T_{obs,2} an dem Messort gemessen wird, wobei dann die Referenztemperatur T_{ref} in die Messung mit eingeht. In diesem Fall fällt der Referenzort mit dem Messort zusammen.

Grundsätzlich kann die erwartete Temperatur Tₑₓₚ durch eine Kombination aus tatsächlicher Temperatur Tᵢₛₜ und Referenztemperatur T_{ref} definiert sein. Beispielsweise erfasst der IR-Sensor bei einem Zusammenfallen von Messort und Referenzort bei angeschalteter Wärmequelle eine zweite Temperatur T_{obs,2}, welche sich zusammensetzt aus der gemessenen ersten Temperatur T_{obs,1}, die durch die tatsächliche Temperatur Tᵢₛₜ des Messobjekts definiert ist, und einer Temperaturerhöhung ΔT, die aus der Referenztemperatur T_{ref} der Wärmequelle resultiert. Abweichungen von T_{obs,2} zu Tₑₓₚ bilden wiederum die Grundlage für die Korrektur von T_{obs,1}.

Gemäß einer vorteilhaften Ausführungsform ist die erwartete Temperatur Tₑₓₚ gleich der Referenztemperatur T_{ref}. In diesem Fall kann eine Fehlfunktion des IR-Sensors besonders einfach festgestellt und durch die Abweichung von T_{obs,2} zu T_{ref} korrigiert werden.

Gemäß einer weiteren Ausführungsform ist der Messort vom Referenzort verschieden. Die Referenztemperatur T_{ref} kann dann durch die Wärmequelle kontinuierlich erzeugt werden.

Außerdem kann die erste Temperatur T_{obs,1} mittels eines ersten IR-Sensors und die zweite Temperatur T_{obs,2} mittels eines zweiten IR-Sensors gemessen werden.

Vorteilhafterweise sind die IR-Sensoren baugleich. Dadurch ist ein direkter Vergleich der Messwerte T_{obs,1} und T_{obs,2} möglich und das Auftreten von Abweichungen, die aus baulichen Verschiedenheiten resultieren könnten, wird vermieden. Zudem können der erste und der zweite IR-Sensor so angeordnet sein, dass der Messort und der Referenzort den gleichen Emissionsgrad aufweisen.

Bevorzugt sind die IR-Sensoren so angeordnet, dass sie gegebenenfalls gleichermaßen von durch die Umgebung verursachten Funktionsbeeinträchtigungen beeinträchtigt werden. Die Ablagerung von Verunreinigungen und/oder Betriebsmitteln, der Kontakt mit korrosiven Prozessgasen und/oder andere Kontaminationen wirken sich dann gleichermaßen auf den ersten IR-Sensor und den zweiten IR-Sensor aus, sodass die Messwerte T_{obs,1} und T_{obs,2} auf gleiche Weise von den gegebenenfalls auftretenden Funktionsbeeinträchtigungen beeinflusst werden. Auf diese Weise ist einerseits sichergestellt, dass ein Vergleich von T_{obs,2} und Tₑₓₚ zuverlässig zur Funktionskontrolle des IR-Sensor-Systems herangezogen werden kann und andererseits, dass eine Korrektur von T_{obs,1} auf Basis von T_{obs,2} und Tₑₓₚ fehlerfrei durchgeführt werden kann.

Gemäß einer weiteren Ausführungsform des Verfahrens wird die Referenztemperatur T_{ref} so eingestellt, dass die zweite Temperatur T_{obs,2} mit der ersten Temperatur T_{obs,1} übereinstimmt. Insbesondere kann eine regelbare Wärmequelle zur Erzeugung der Referenztemperatur T_{ref} eingesetzt werden, mittels welcher T_{ref} so justiert wird, dass die am Referenzort mittels des zweiten IR-Sensors gemessene zweite Temperatur T_{obs,2} mit der am Messort mittels des ersten IR-Sensors gemessenen ersten Temperatur T_{obs,1} übereinstimmt. Bei einer Abweichung von T_{obs,2} von Tₑₓₚ, welche durch die eingestellte Referenztemperatur T_{ref} definiert ist, kann von einer Funktionsbeeinträchtigung des zweiten IR-Sensors ausgegangen werden. Tᵢₛₜ entspricht dann T_{ref}, wenn T_{obs,2} mit T_{obs,1} übereinstimmt, wodurch T_{obs,1} zu Tᵢₛₜ kompensiert werden kann.

Die zweite Temperatur T_{obs,2} kann an einem Bauteil der Vakuumpumpe, in welche das IR-Sensor-System integriert ist, gemessen werden. In diesem Fall kann die Temperatur des Bauteils beispielsweise als Referenztemperatur T_{ref} dienen und eine Abweichung der tatsächlichen Bauteiltemperatur von der mit dem zweiten IR-Sensor gemessenen Temperatur T_{obs,2} zur Korrektur von T_{obs,1} herangezogen werden. Zum Beispiel kann T_{obs,2} an einem Motorstator einer Vakuumpumpe gemessen werden, wobei der Emissionsgrad der Referenzoberfläche des Motorstators mit dem Emissionsgrad des Messorts übereinstimmen kann. Zudem kann an dem Motorstator ein weiterer Temperatursensor, beispielsweise ein Widerstandsthermometer, die tatsächliche Temperatur des Motorstators, d. h. T_{ref}, bestimmen. Dies hat den Vorteil, dass kein zusätzliches Heizelement als Wärmequelle in die Vakuumpumpe eingebaut werden muss, um das Verfahren zum Ermitteln einer Temperatur durchzuführen.

Die erste Temperatur T_{obs,1} und die zweite Temperatur T_{obs,2} können mit demselben IR-Sensor gemessen werden, sodass der Messort und der Referenzort zusammenfallen. Dies hat den Vorteil, dass Funktionsbeeinträchtigungen des IR-Sensors unmittelbar mit eben diesem IR-Sensor detektiert werden. Messunsicherheiten durch Bauart, Positionierung oder ähnliches werden dadurch gänzlich vermieden.

Weiterer Gegenstand der Erfindung ist zudem eine Vakuumpumpe mit einem IR-Sensor-System, das in die Vakuumpumpe integriert ist, mit dem sich ein Verfahren zum Ermitteln einer Temperatur wie vorstehend beschrieben durchführen lässt. Das IR-Sensor-System umfasst eine Temperaturmesseinheit mit mindestens einem IR-Sensor zur Messung einer ersten Temperatur T_{obs,1} an einem Messort und zur Messung einer zweiten Temperatur T_{obs,2} an einem Referenzort, eine Wärmequelle, die dazu ausgebildet ist, eine Referenztemperatur T_{ref} an dem Referenzort zu erzeugen, sowie eine Steuereinheit, die dazu ausgebildet ist, die zweite Temperatur T_{obs,2} mit einer aus der Referenztemperatur T_{ref} resultierenden erwarteten Temperatur Tₑₓₚ zu vergleichen und bei einer Abweichung der zweiten Temperatur T_{obs,2} von der erwarteten Temperatur Tₑₓₚ die erste Temperatur T_{obs,1} anhand der Abweichung zu korrigieren.

Mit dem erfindungsgemäßen IR-Sensor-System lassen sich die voranstehend beschriebenen Vorteile des Verfahrens zum Ermitteln einer Temperatur entsprechend erreichen.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine Querschnittsansicht einer Turbomolekularpumpe mit einem IR-Sensor-System gemäß einer ersten Ausführungsform;
- Fig. 7: eine Querschnittsansicht einer Turbomolekularpumpe mit einem IR-Sensor-System gemäß einer zweiten Ausführungsform;
- Fig. 8A: eine Frontansicht eines IR-Sensors für ein IR-Sensor-System gemäß einer dritten Ausführungsform;
- Fig. 8B: eine Querschnittsansicht des IR-Sensors aus Fig. 8A;
- Fig. 9A: einen Temperaturverlauf gemessen mit einem sauberen IR-Sensor gemäß Fig. 8;
- Fig. 9B: einen Temperaturverlauf gemessen mit einem verunreinigten IR-Sensor gemäß Fig. 8;
- Fig. 9C: einen Temperaturverlauf gemessen mit einem wieder gereinigten IR-Sensor gemäß Fig. 8.

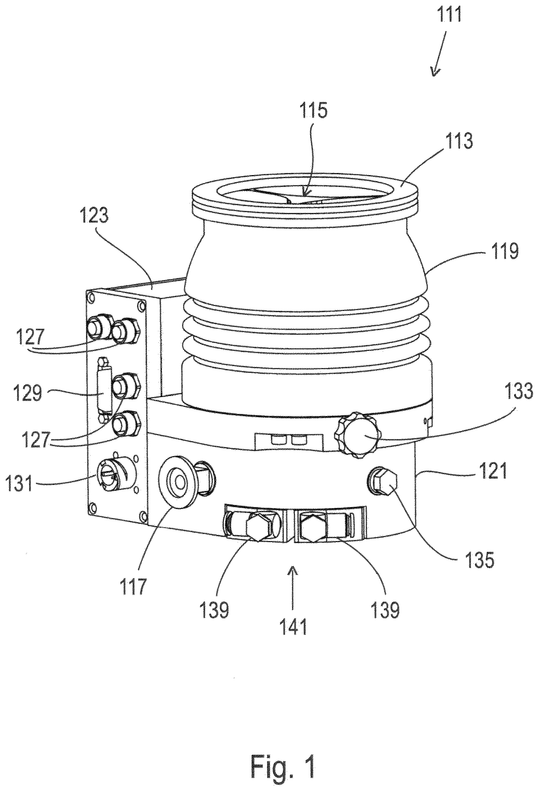

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

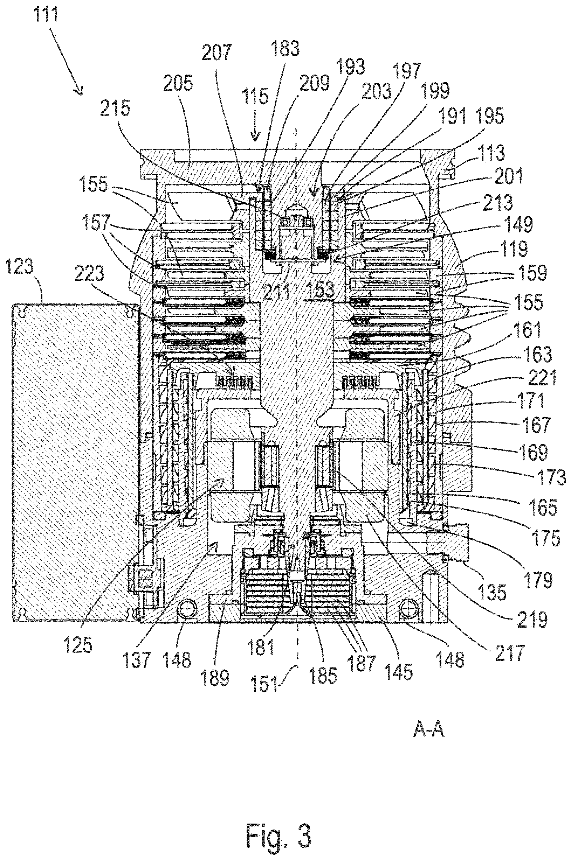

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

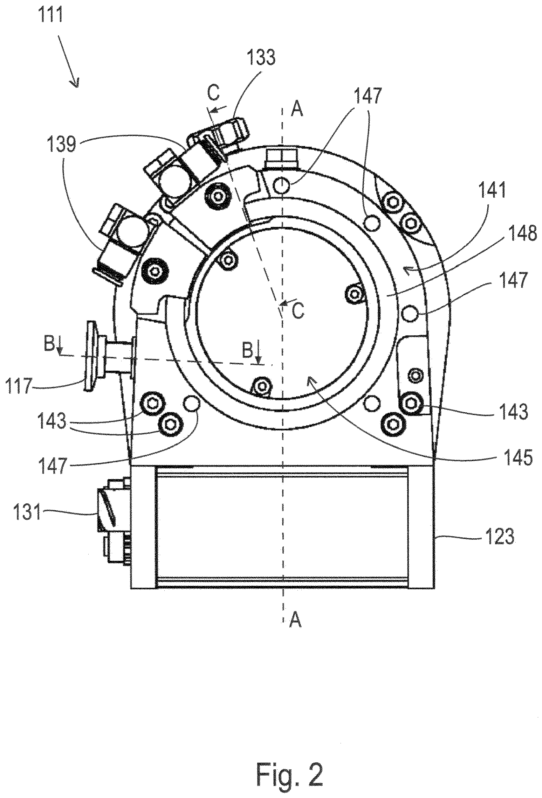

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

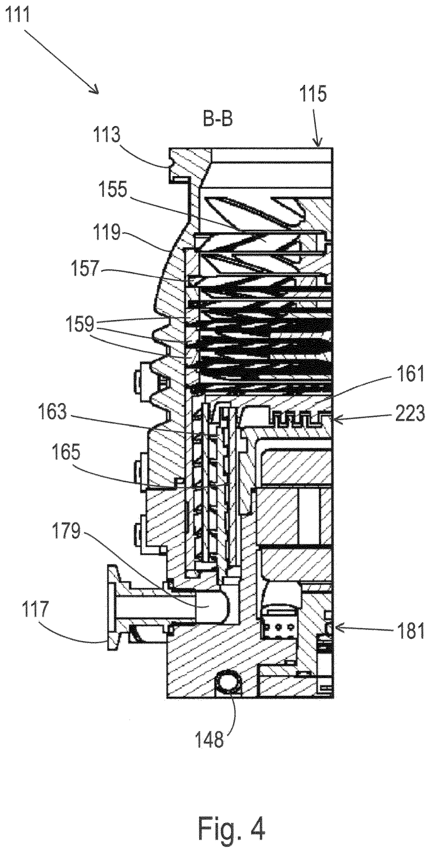

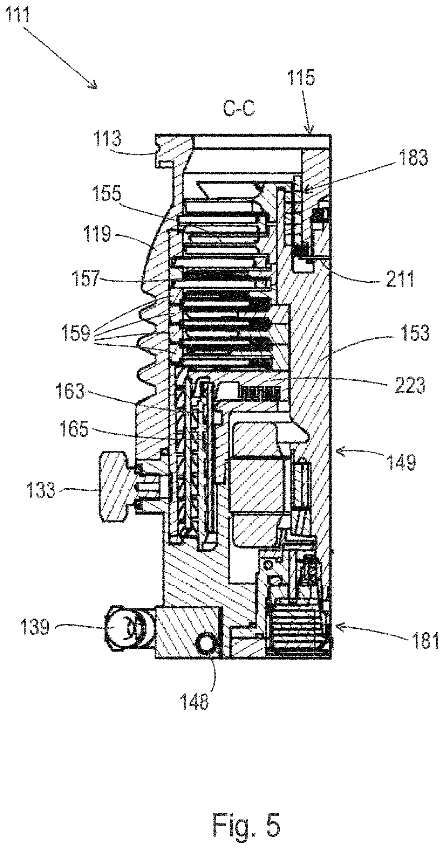

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

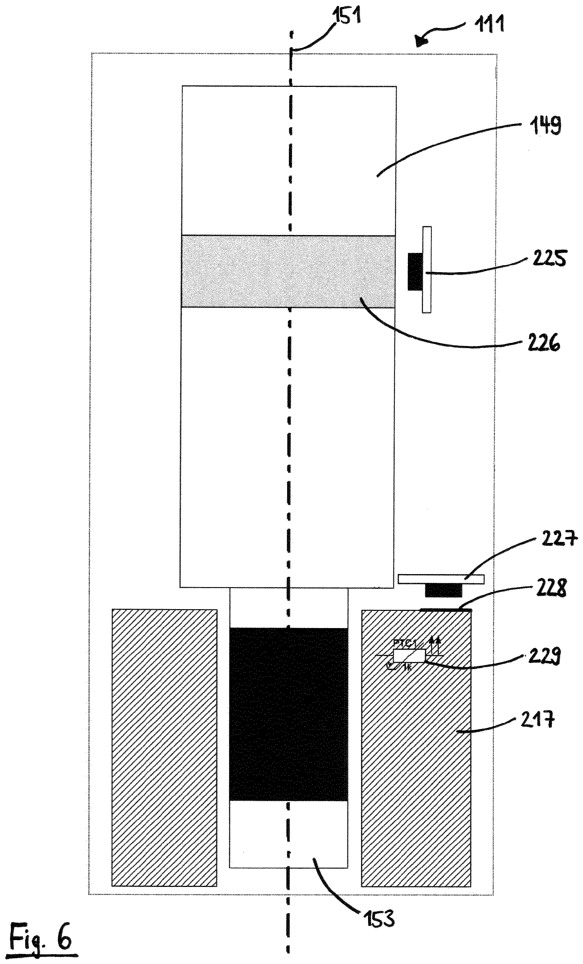

Fig. 6 zeigt eine Turbomolekularpumpe 111 mit einem IR-Sensor-System gemäß einer ersten Ausführungsform zum Ermitteln der Temperatur Tᵢₛₜ an einem Messort 226 auf dem Rotor 149 der Turbomolekularpumpe 111. Das IR-Sensor-System umfasst zwei IR-Sensoren 225, 227 auf jeweils einer Platine, wobei beide IR-Sensoren baugleich sind. Der erste IR-Sensor 225 erfasst eine erste Temperatur T_{obs,1} an dem Messort 226, der auf dem Rotor 149 angeordnet ist. Der zweite IR-Sensor 227 erfasst eine zweite Temperatur T_{obs,2} an einem Referenzort 228. Gemäß der vorliegenden Ausführungsform ist der Referenzort 228 auf der Oberfläche des Motorstators 217 angeordnet, wobei die Oberfläche des Referenzorts 228 den gleichen Emissionsgrad aufweist wie die Oberfläche des Messorts 226. Der Motorstator 217 wirkt als Wärmequelle und stellt eine Referenztemperatur T_{ref} am Referenzort 228 bereit. Ein Temperatursensor 229, der hier beispielhaft einen Kaltleiter aufweist, erfasst die Referenztemperatur T_{ref} des Motorstators 217.

Die IR-Sensoren 225, 227 sind in der Turbomolekularpumpe 111 so angeordnet, dass sie Einflüssen aus dem Pumpeninneren, die die Funktion der IR-Sensoren 225, 227 beeinträchtigen können, gleichermaßen ausgesetzt sind. Eine Verunreinigung bzw. Funktionsbeeinträchtigung des IR-Sensors 227 wirkt sich gegebenenfalls also ebenso auf den IR-Sensor 225 aus.

Zum Ermitteln der Temperatur auf dem Rotor 149 bzw. der Rotorwelle 153, gemessen am Messort 226, wird von einer Steuereinheit (nicht gezeigt) die von dem IR-Sensor 227 gemessene Temperatur T_{obs,2} mit einer erwarteten Temperatur Tₑₓₚ verglichen. Gemäß der vorliegenden Ausführungsform entspricht die erwartete Temperatur Tₑₓₚ am Referenzort 228 der Referenztemperatur T_{ref}, die durch den Motorstator 217 erzeugt und mittels des Temperatursensors 229 erfasst wird. Weicht die von dem IR-Sensor 227 gemessene Temperatur T_{obs,2} von der bekannten Referenztemperatur T_{ref} ab, muss davon ausgegangen werden, dass der IR-Sensor 227 in seiner Funktion beeinträchtigt ist, beispielsweise durch abgelagerte Verunreinigungen oder durch veränderte IR-Transmission nach Kontakt mit korrosiven Prozessgasen. Aufgrund der Positionierung im Bereich gleicher Umgebungseinflüsse kann auf eine entsprechende Funktionsbeeinträchtigung des IR-Sensors 225 geschlossen werden. Entsprechend muss davon ausgegangen werden, dass die gemessene Temperatur T_{obs,1} nicht die tatsächliche Temperatur Tᵢₛₜ der Rotorwelle 153 am Messort 226 widerspiegelt.

Um Tᵢₛₜ der Rotorwelle 153 zu ermitteln, wird von der Steuereinheit ein Korrekturfaktor zur Umrechnung von T_{obs,1} in Tᵢₛₜ bestimmt, welcher das Verhältnis zwischen der mittels des IR-Sensors 227 gemessenen zweiten Temperatur T_{obs,2} und der mittels des Temperatursensors 229 gemessenen tatsächlich vorliegenden Referenztemperatur T_{ref} berücksichtigt.

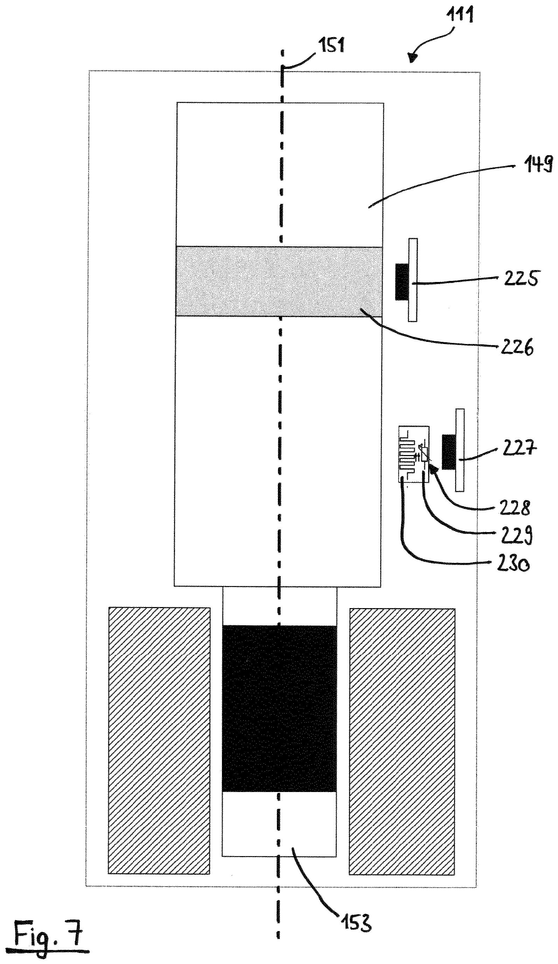

Fig. 7 zeigt eine Turbomolekularpumpe 111 mit einem IR-Sensor-System gemäß einer zweiten Ausführungsform. Das IR-Sensor-System umfasst ebenfalls zwei baugleiche IR-Sensoren 225, 227, wobei der erste IR-Sensor 225 die Temperatur T_{obs,1} an einem Messort 226 erfasst, der auf der Rotorwelle 153 angeordnet ist. Der zweite IR-Sensor 227 erfasst an einem Referenzort 228 eine Temperatur T_{obs,2}, die durch eine Wärmequelle 230 erzeugt wird. In der gezeigten Ausführungsform ist die Wärmequelle 230 als regelbare Heizung ausgebildet, die einen Temperatursensor 229 aufweist, der zur Erfassung der tatsächlich durch die Heizung 230 bereitgestellten Referenztemperatur T_{ref} dient.

Wiederum sind die IR-Sensoren 225, 227 derart angeordnet, dass Funktionsbeeinträchtigungen durch Umgebungseinflüsse sich auf beide IR-Sensoren 225, 227 gleichermaßen auswirken.

Zum Ermitteln der tatsächlichen Temperatur Tᵢₛₜ am Messort 226 auf der Rotorwelle 153 wird der zweite IR-Sensor 227 mittels der regelbaren Heizquelle 230 aufgeheizt, wobei der zweite IR-Sensor 227 die Temperatur T_{obs,2} misst. Die Temperatur T_{ref} der Heizquelle 230 wird so justiert, dass die an dem zweiten IR-Sensor 227 erfasste Temperatur T_{obs,2} gleich der an dem ersten IR-Sensor 225 erfassten Temperatur T_{obs,1} ist. Ist das der Fall, so entspricht die tatsächliche Temperatur Tᵢₛₜ an dem Messort 226 der Temperatur T_{ref} der Heizquelle 230, die mit dem Temperatursensor 229 erfasst wird.

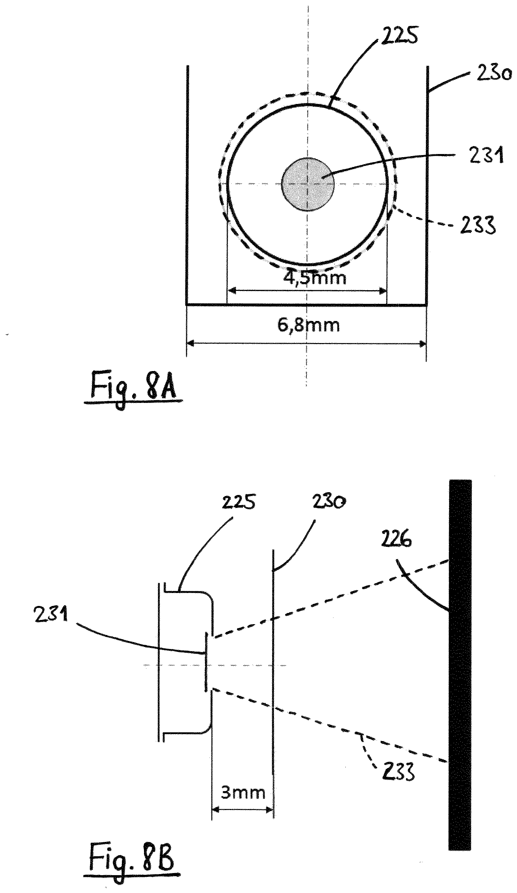

Fig. 8A zeigt eine Frontansicht eines IR-Sensor-Systems zum Ermitteln einer Temperatur gemäß einer dritten Ausführungsform, wobei das System lediglich einen IR-Sensor 225 umfasst, der ein IR-Transmissionsfenster 231 aufweist. Der IR-Sensor 225 ist vor einem Messort 226 (vergleiche Fig. 8B) positioniert und weist ein Sichtfeld 233 auf. Das IR-Sensor-System umfasst zudem eine Wärmequelle 230 als IR-Referenzstrahler, die in der gezeigten Ausführungsform als Heizdraht 230 um das Sichtfeld 233 des IR-Sensors 225 herum angeordnet ist.

Bei einem Stromfluss durch den Heizdraht 230 emittiert der Draht 230 IR-Strahlung, die durch den IR-Sensor 225 detektiert wird. Aus der Querschnittsansicht des IR-Sensor-Systems in Fig. 8B wird deutlich, dass sich das Messsignal des IR-Sensors 225 bei eingeschaltetem Stromfluss durch den Heizdraht 230 aus einem am Messort 226 emittierten Anteil und einem von dem Heizdraht 230 emittierten Anteil zusammensetzt.

Zum Ermitteln der tatsächlichen Temperatur Tᵢₛₜ am Messort 226 wird der Heizdraht 230 mit einer spezifischen Leistung mit elektrischer Energie beaufschlagt. Der Heizdraht 230 emittiert dann eine bekannte Referenztemperatur T_{ref}, die unabhängig von der Temperatur des Messorts 226 ist. An dem IR-Sensor 225 wird entsprechend eine um eine Differenztemperatur ΔT erhöhte Temperatur T_{obs,2} registriert, die durch die Referenztemperatur T_{ref} definiert ist und bei einwandfreier Funktion des IR-Sensors 225 gleich T_{ref} ist.

Wird der Draht 230 lediglich gepulst und beispielsweise periodisch mit elektrischer Leistung beaufschlagt, erfasst der IR-Sensor 225 immer dann die Temperatur T_{obs,1}, die von dem Messort 226 ausgeht, wenn der Stromfluss durch den Heizdraht 230 ausgeschaltet ist. Bei eingeschaltetem Stromfluss durch den Heizdraht 230 wird hingegen die Temperatur T_{obs,2} erfasst, welche sich aus T_{obs,1} und der Temperaturerhöhung ΔT zusammensetzt. T_{obs,1} und T_{obs,2} werden folglich an demselben Messort 226 und mit demselben IR-Sensor 225 gemessen, wobei der IR-Sensor 225 abhängig vom Zeitpunkt der Messung T_{obs,1} oder T_{obs,2} erfasst.

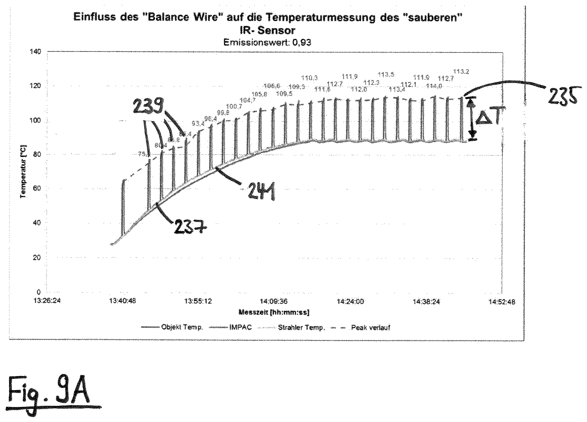

Fig. 9A zeigt den Verlauf 235 der durch einen optimal funktionierenden IR-Sensor 225 gemäß der dritten Ausführungsform erfassten Temperatur während des Ermittelns der Temperatur Tᵢₛₜ an dem Messort 226. Zum Vergleich ist der Verlauf 241 der tatsächlichen Temperatur Tᵢₛₜ am Messort 226 gezeigt. Der erfasste Temperaturverlauf 235 weist eine größtenteils mit dem tatsächlichen Temperaturverlauf 241 überlagerte Basislinie 237 auf. Diese entspricht der Messung der Temperatur T_{obs,1} während der Zeiten mit ausgeschaltetem Heizdraht 230. Zudem weist der erfasste Temperaturverlauf 235 periodisch auftretende, charakteristische Temperaturspitzen 239 auf. Diese Temperaturspitzen 239 entsprechen der gemessenen Temperatur T_{obs,2}, während Strom durch den Heizdraht 230 fließt. Die Temperatur T_{obs,2} setzt sich für den optimal funktionierenden IR-Sensor 225 also aus der Temperatur T_{obs,1} und der durch den Heizdraht 230 verursachten Temperaturerhöhung ΔT zusammen. Die Temperatur T_{obs,2} entspricht im gezeigten Fall der Referenztemperatur T_{ref}.

Für die erwartete Temperatur Tₑₓₚ gilt bei eingeschaltetem Heizdraht 230, dass die von dem IR-Sensor 225 registrierte Temperatur T_{obs,2} gleich der bekannten, von dem Heizdraht 230 emittierten, Referenztemperatur T_{ref} sein sollte. Da die Temperatur T_{obs,2} in Fig. 9A mit der bekannten Referenztemperatur T_{ref} übereinstimmt, ist von einem optimal funktionierenden IR-Sensor 225 auszugehen. In diesem Fall stimmt auch die Temperatur T_{obs,1} mit der tatsächlichen Temperatur Tᵢₛₜ an dem Messort 226 überein. Dies bestätigt sich durch das Aufeinanderfallen der Basislinie 237 des erfassten Temperaturverlaufs 235 mit dem Verlauf 241 der tatsächlichen Temperatur Tᵢₛₜ.

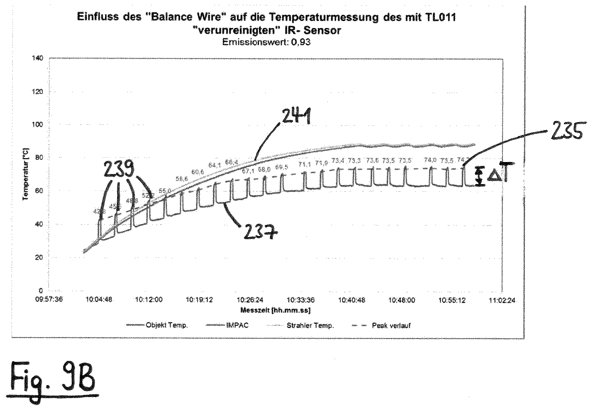

Fig. 9B zeigt den Verlauf 235 der durch den IR-Sensor 225 erfassten Temperatur für einen Fall, in dem der IR-Sensor 225 durch Verunreinigungen in seiner Funktion beeinträchtigt ist. Zum Vergleich ist wiederum der tatsächliche Temperaturverlauf 241 am Messort 226 gezeigt. Der Heizdraht 230 wird mit der gleichen spezifischen elektrischen Leistung beaufschlagt wie in Fig. 9A. Entsprechend sollte der IR-Sensor 225 bei eingeschaltetem Heizdraht 230 die Temperatur T_{ref} erfassen. Tatsächlich unterscheiden sich die Temperaturspitzen 239 in Fig. 9B jedoch von der Basislinie 237 um einen Wert ΔT, der kleiner ist als der erwartete Wert für die Referenztemperatur T_{ref}. Somit weicht die gemessene zweite Temperatur T_{obs,2} von der erwarteten Temperatur Tₑₓₚ ab. Daraus kann abgeleitet werden, dass der IR-Sensor 225 in seiner Funktion beeinträchtigt ist.

In der Folge kann beispielsweise durch eine Steuereinheit ein Alarmsignal ausgegeben werden oder eine Vakuumpumpe, z. B. eine Turbomolekularpumpe, in die das IR-Sensor-System integriert ist, abgeschaltet werden, um eine Beschädigung zu vermeiden. Alternativ oder zusätzlich kann der gemessene Temperaturwert T_{obs,1}, welcher der Basislinie 237 entspricht, mittels eines Korrekturfaktors zur tatsächlichen Temperatur Tᵢₛₜ korrigiert werden, in welchen das Verhältnis der erwarteten Temperatur Tₑₓₚ zu der bei eingeschaltetem Heizstrom gemessenen zweiten Temperatur T_{obs,2} bzw. das Verhältnis der Referenztemperatur T_{ref} zur gemessenen zweiten Temperatur T_{obs,2} einfließt. Außerdem kann die Steuereinheit eine Aufforderung ausgeben, eine Wartung bzw. Reparatur des IR-Sensor-Systems vorzunehmen.

Beispielsweise kann eine Bestimmung der tatsächlichen Temperatur Tᵢₛₜ an dem Messort 226 aus dem Temperaturverlauf 235 von Fig. 9B insbesondere dann erfolgen, wenn sich das System in einem thermischen Gleichgewicht befindet, also in einem Bereich der Temperaturkurven, in welchem die Basislinie 237 einen im Wesentlichen konstanten Temperaturwert angenommen hat. Die gemessene Temperatur T_{obs,2} bei angeschaltetem Heizdraht 230 beträgt in diesem Bereich an den Temperaturspitzen 239 etwa 75°C, während - zum Beispiel aus Fig. 9A - bekannt ist, dass die Referenztemperatur T_{ref} bei etwa 112 °C liegt. Der bei ausgeschaltetem Heizdraht 230 gemessene Wert für die Temperatur T_{obs,1} beträgt im thermischen Gleichgewicht etwa 60° C, woraus sich mit einem Korrekturfaktor von T_{ref} / T_{obs,2} ≈ 1,5 eine tatsächliche Temperatur Tᵢₛₜ von etwa 90°C an dem Messort 226 errechnet. Dies ist in guter Übereinstimmung mit dem in Fig. 9B gezeigten tatsächlichen Temperaturverlauf 241 an dem Messort 226.

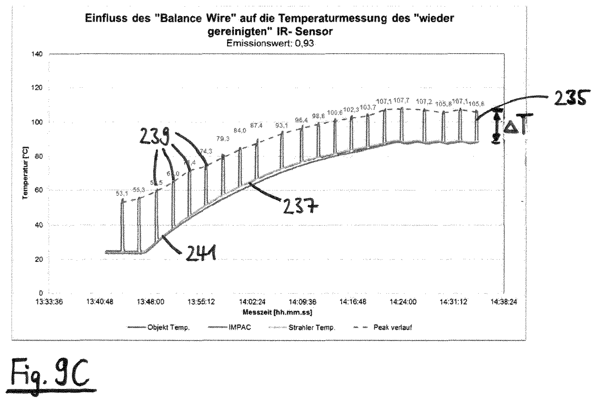

Fig. 9C zeigt den Verlauf 235 der durch einen verschmutzten und anschließend wieder gereinigten IR-Sensor 225 erfassten Temperatur, sowie eine Kontrollkurve 241, die den Verlauf von Tᵢₛₜ wiedergibt. Die beobachteten Temperaturspitzen 239 bewegen sich nach der Reinigung des IR-Sensors 225 wieder um die Referenztemperatur T_{ref} herum und weisen eine entsprechend große Temperaturdifferenz ΔT im Vergleich zur Basislinie 237 des Temperaturverlaufs 235 auf. Da die bei angeschaltetem Heizdraht 230 gemessene Temperatur T_{obs,2} wieder mit der Referenztemperatur T_{ref} übereinstimmt, entspricht die gemessene Temperatur T_{obs,2} der erwarteten Temperatur Tₑₓₚ. Entsprechend kann von einer einwandfreien Funktion des IR-Sensors 225 ausgegangen werden, was durch das Aufeinanderfallen der Basislinie 237 mit der Linie des tatsächlichen Temperaturverlaufs 241 bestätigt wird.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 225: erster IR-Sensor
- 226: Messort
- 227: zweiter IR-Sensor
- 228: Referenzort
- 229: Temperatursensor
- 230: Wärmequelle
- 231: IR-Transmissionsfenster
- 233: Sichtfeld
- 235: gemessener Temperaturverlauf
- 237: Basislinie
- 239: Temperaturspitze
- 241: tatsächlicher Temperaturverlauf

## Patentansprüche

1. Verfahren zum Ermitteln einer Temperatur mittels eines in einer Vakuumpumpe (111), insbesondere Turbomolekularpumpe, integrierten IR-Sensor-Systems, bei dem
eine erste Temperatur T_{obs,1} an einem Messort (226) gemessen wird,
eine Referenztemperatur T_{ref} durch eine Wärmequelle (230) an einem Referenzort (228) erzeugt wird,
eine zweite Temperatur T_{obs,2} an dem Referenzort (228) gemessen wird, die zweite Temperatur T_{obs,2} mit einer aus der Referenztemperatur T_{ref} resultierenden erwarteten Temperatur Tₑₓₚ verglichen wird, und
bei einer Abweichung der zweiten Temperatur T_{obs,2} von der erwarteten Temperatur Tₑₓₚ die erste Temperatur T_{obs,1} anhand der Abweichung korrigiert wird.

2. Verfahren nach Anspruch 1,
**dadurch gekennzeichnet,**
**dass** basierend auf der Abweichung der zweiten Temperatur T_{obs,2} von der erwarteten Temperatur Tₑₓₚ ein Korrekturfaktor ermittelt wird, mittels welchem eine tatsächliche Temperatur Tᵢₛₜ an dem Messort (226) aus der ersten Temperatur T_{obs,1} bestimmt wird.

3. Verfahren nach Anspruch 1 oder 2,
**dadurch gekennzeichnet,**
**dass** die Referenztemperatur T_{ref} der Wärmequelle (230) mittels eines Messfühlers (229) erfasst wird.

4. Verfahren nach zumindest einem der vorstehenden Ansprüche,
**dadurch gekennzeichnet,**
**dass** die Referenztemperatur T_{ref} durch die Wärmequelle (230) nur zeitweise, insbesondere gepulst, erzeugt wird.

5. Verfahren nach zumindest einem der vorstehenden Ansprüche,
**dadurch gekennzeichnet,**
**dass** die erwartete Temperatur Tₑₓₚ durch eine Kombination von tatsächlicher Temperatur Tᵢₛₜ und Referenztemperatur T_{ref} definiert wird.

6. Verfahren nach zumindest einem der vorstehenden Ansprüche,
**dadurch gekennzeichnet,**
**dass** die erwartete Temperatur Tₑₓₚ und die Referenztemperatur T_{ref} gleich sind.

7. Verfahren nach zumindest einem der vorstehenden Ansprüche,
**dadurch gekennzeichnet,**
**dass** der Messort (226) von dem Referenzort (228) verschieden ist.

8. Verfahren nach zumindest einem der vorstehenden Ansprüche,
**dadurch gekennzeichnet,**
**dass** die erste Temperatur T_{obs,1} mittels eines ersten IR-Sensors (225) gemessen wird und die zweite Temperatur T_{obs,2} mittels eines zweiten IR-Sensors (227) gemessen wird.

9. Verfahren nach Anspruch 8,
**dadurch gekennzeichnet,**
**dass** die IR-Sensoren (225, 227) baugleich sind.

10. Verfahren nach Anspruch 8 oder 9,
**dadurch gekennzeichnet,**
**dass** die IR-Sensoren (225, 227) so angeordnet sind, dass sie gegebenenfalls gleichermaßen von durch die Umgebung verursachten Funktionsbeeinträchtigungen beeinträchtigt werden.

11. Verfahren nach zumindest einem der Ansprüche 7 bis 10,
**dadurch gekennzeichnet,**
**dass** die Referenztemperatur T_{ref} so eingestellt wird, dass die zweite Temperatur T_{obs,2} mit der ersten Temperatur T_{obs,1} übereinstimmt.

12. Verfahren nach zumindest einem der Ansprüche 7 bis 11,
**dadurch gekennzeichnet,**
**dass** die zweite Temperatur T_{obs,2} an einem Bauteil (217) der Vakuumpumpe (111), in die das IR-Sensor-System integriert ist, gemessen wird.

13. Verfahren nach zumindest einem der Ansprüche 1 bis 6,
**dadurch gekennzeichnet,**
**dass** der Messort (226) und der Referenzort (228) zusammenfallen und die erste Temperatur T_{obs,1} und die zweite Temperatur T_{obs,2} mit demselben IR-Sensor (225) gemessen werden.

14. Vakuumpumpe (111) mit einem IR-Sensor-System, das in die Vakuumpumpe (111) integriert ist, zur Durchführung eines Verfahrens nach zumindest einem der vorstehenden Ansprüche, das IR-Sensor-System umfassend
eine Temperaturmesseinheit mit mindestens einem IR-Sensor (225) zur Messung einer ersten Temperatur T_{obs,1} an einem Messort (226) und zur Messung einer zweiten Temperatur T_{obs,2} an einem Referenzort (228), eine Wärmequelle (230), die dazu ausgebildet ist, eine Referenztemperatur T_{ref} an dem Referenzort (228) zu erzeugen, sowie eine Steuereinheit, die dazu ausgebildet ist, die zweite Temperatur T_{obs,2} mit einer aus der Referenztemperatur T_{ref} resultierenden erwarteten Temperatur Tₑₓₚ zu vergleichen und
bei einer Abweichung der zweiten Temperatur T_{obs,2} von der erwarteten Temperatur Tₑₓₚ die erste Temperatur T_{obs,1} anhand der Abweichung zu korrigieren.

## Claims

1. A method of determining a temperature by means of an IR sensor system integrated in a vacuum pump (111), in particular in a turbomolecular pump, in which
a first temperature T_{obs,1} is measured at a measurement location (226);
a reference temperature T_{ref} is generated by a heat source (230) at a reference location (228);
a second temperature T_{obs,2} is measured at the reference location (228);
the second temperature T_{obs,2} is compared with an expected temperature Tₑₓₚ resulting from the reference temperature T_{ref}; and,
on a deviation of the second temperature T_{obs,2} from the expected temperature Tₑₓₚ, the first temperature T_{obs,1} is corrected on the basis of the deviation.

2. A method in accordance with claim 1,
**characterized in that**,
based on the deviation of the second temperature T_{obs,2} from the expected temperature Tₑₓₚ, a correction factor is determined by means of which an actual temperature Tᵢₛₜ at the measurement location (226) is determined from the first temperature T_{obs,1}.

3. A method in accordance with claim 1 or claim 2,
**characterized in that**
the reference temperature T_{ref} of the heat source (230) is detected by means of a measuring sensor (229).

4. A method in accordance with at least one of the preceding claims,
**characterized in that**
the reference temperature T_{ref} is generated by the heat source (230) only at times, in particular in a pulsed manner.

5. A method in accordance with at least one of the preceding claims,
**characterized in that**
the expected temperature Tₑₓₚ is defined by a combination of the actual temperature Tᵢₛₜ and the reference temperature T_{ref}.

6. A method in accordance with at least one of the preceding claims,
**characterized in that**
the expected temperature Tₑₓₚ and the reference temperature T_{ref} are the same.

7. A method in accordance with at least one of the preceding claims,
**characterized in that**
the measurement location (226) differs from the reference location (228).

8. A method in accordance with at least one of the preceding claims,
**characterized in that**
the first temperature T_{obs,1} is measured by means of a first IR sensor (225) and the second temperature T_{obs,2} is measured by means of a second IR sensor (227).

9. A method in accordance with claim 8,
**characterized in that**
the IR sensors (225, 227) are of the same construction.

10. A method in accordance with claim 8 or claim 9,
**characterized in that**
the IR sensors (225, 227) are arranged such that they may be equally impaired by functional impairments caused by the environment.

11. A method in accordance with at least one of the claims 7 to 10,
**characterized in that**
the reference temperature T_{ref} is set such that the second temperature T_{obs,2} corresponds to the first temperature T_{obs,1}.

12. A method in accordance with at least one of the claims 7 to 11,
**characterized in that**
the second temperature T_{obs,2} is measured at a component (217) of the vacuum pump (111) in which the IR sensor system is integrated.

13. A method in accordance with at least one of the claims 1 to 6,
**characterized in that**
the measurement location (226) and the reference location (228) coincide and the first temperature T_{obs,1} and the second temperature T_{obs,2} are measured by the same IR sensor (225).

14. A vacuum pump (111) having an IR sensor system, which is integrated in the vacuum pump (111), for carrying out a method in accordance with at least one of the preceding claims, the IR sensor system comprising
a temperature measurement unit having at least one IR sensor (225) for measuring a first temperature T_{obs,1} at a measurement location (226) and for measuring a second temperature T_{obs,2} at a reference location (228);
a heat source (230) which is configured to generate a reference temperature T_{ref} at the reference location (228); and
a control unit which is configured to compare the second temperature T_{obs,2} with an expected temperature Tₑₓₚ resulting from the reference temperature T_{ref} and,
on a deviation of the second temperature T_{obs,2} from the expected temperature Tₑₓₚ, to correct the first temperature T_{obs,1} on the basis of the deviation.

## Revendications

1. Procédé pour déterminer une température au moyen d'un système de capteurs IR intégré dans une pompe à vide (111), en particulier dans une pompe turbomoléculaire, dans lequel
une première température T_{obs,1} est mesurée à un endroit de mesure (226), une température de référence T_{ref} est engendrée par une source de chaleur (230) à un endroit de référence (228),
une seconde température T_{obs,2} est mesurée à l'endroit de référence (228), la seconde température T_{obs,2} est comparée à une température attendue Tₑₓₚ résultant de la température de référence T_{ref}, et
en cas d'écart de la seconde température T_{obs,2} par rapport à la température attendue Tₑₓₚ, la première température T_{obs,1} est corrigée sur la base dudit écart.

2. Procédé selon la revendication 1,
**caractérisé en ce que**
sur la base de l'écart de la seconde température T_{obs,2} par rapport à la température attendue Tₑₓₚ, un facteur de correction est déterminé, au moyen duquel une température réelle Tₑₛₜ est déterminée à l'endroit de mesure (226) à partir de la première température T_{obs,1}.

3. Procédé selon la revendication 1 ou 2,
**caractérisé en ce que**
la température de référence T_{ref} de la source de chaleur (230) est détectée au moyen d'une sonde de mesure (229).

4. Procédé selon l'une au moins des revendications précédentes,
**caractérisé en ce que**
la température de référence T_{ref} n'est générée par la source de chaleur (230) que temporairement, en particulier de manière puisée.

5. Procédé selon l'une au moins des revendications précédentes,
**caractérisé en ce que**
la température attendue Tₑₓₚ est définie par une combinaison de la température réelle Test et de la température de référence T_{ref}.

6. Procédé selon l'une au moins des revendications précédentes,
**caractérisé en ce que**
la température attendue Tₑₓₚ et la température de référence T_{ref} sont égales.

7. Procédé selon l'une au moins des revendications précédentes,
**caractérisé en ce que**
l'endroit de mesure (226) est différent de l'endroit de référence (228).

8. Procédé selon l'une au moins des revendications précédentes,
**caractérisé en ce que**
la première température T_{obs,1} est mesurée au moyen d'un premier capteur IR (225), et la seconde température T_{obs,2} est mesurée au moyen d'un second capteur IR (227).

9. Procédé selon la revendication 8,
**caractérisé en ce que**
les capteurs IR (225, 227) sont de construction identique.

10. Procédé selon la revendication 8 ou 9,
**caractérisé en ce que**
les capteurs IR (225, 227) sont disposés de manière à être affectés, le cas échéant, de manière égale par des entraves fonctionnelles causées par l'environnement.

11. Procédé selon l'une au moins des revendications 7 à 10,
**caractérisé en ce que**
la température de référence T_{ref} est ajustée de telle sorte que la seconde température T_{obs,2} coïncide avec la première température T_{obs,1}.

12. Procédé selon l'une au moins des revendications 7 à 11,
**caractérisé en ce que**
la seconde température T_{obs,2} est mesurée sur un composant (217) de la pompe à vide (111) dans laquelle le système de capteurs IR est intégré.

13. Procédé selon l'une au moins des revendications 1 à 6,
**caractérisé en ce que**
l'endroit de mesure (226) et l'endroit de référence (228) coïncident, et
la première température T_{obs,1} et la seconde température T_{obs,2} sont mesurées avec le même capteur IR (225).

14. Pompe à vide (111) comportant un système de capteurs IR intégré dans la pompe à vide (111), pour la mise en œuvre d'un procédé selon l'une au moins des revendications précédentes, le système de capteurs IR comportant
une unité de mesure de température ayant au moins un capteur IR (225) pour mesurer une première température T_{obs,1} à un endroit de mesure (226) et pour mesurer une seconde température T_{obs 2} à un endroit de référence (228),
une source de chaleur (230) réalisée pour engendrer une température de référence T_{ref} à l'endroit de référence (228), ainsi que une unité de commande réalisée pour comparer la seconde température T_{obs,2} avec une température attendue Tₑₓₚ résultant de la température de référence T_{ref}, et pour, en cas d'écart de la seconde température T_{obs,2} par rapport à la température attendue Tₑₓₚ, corriger la première température T_{obs,1} en fonction dudit écart.
